# EUROPEAN PATENT SPECIFICATION

(11) **EP 2 025 944 B1**
(45) Date of publication and mention of the grant of the patent: **09.08.2017**
(21) Application number: 07425519.1
(22) Date of filing: 09.08.2007
(51) Int. Cl.: F04D 13/06, H02K 21/18

(54) **Mono-phase syncronous electric motorfor household appliances**
Einphasiger Synchronmotor für Hausgeräte
Moteur synchrone monophasé pour machines domestiques

(43) Date of publication of application: 18.02.2009
(73) Proprietor: Askoll Holding S.r.l., 36031 Povolaro di Dueville (Vicenza) (IT)
(72) Inventor: Marioni, Elio, 36031 Dueville (Vicenza) (IT)
(74) Representative: Botti, Mario

(56) References cited:
- EP-A- 0 581 598
- EP-A- 1 760 859
- DE-A1- 3 518 697
- DE-A1- 3 810 158
- GB-A- 2 407 712

## Description

### Field of application

The object of the present invention is a motor-pump assembly for household appliances such as dishwashers and washing machines, in particular for discharging water, of the type comprising a pump equipped with an impeller and a single-phase synchronous electric motor equipped with a stator and with a rotor mutually separated by a mechanically-formed air gap, the rotor being of the type using permanent magnets, the stator being of the diapason type and equipped with a pack core of laminations and with a pair of pole pieces that wrap coaxially around the rotor.

### Prior art

It is known that there is a need to make motor-pump discharge assemblies for household appliances, such as washing machines and dishwashers, such as to have the best possible yield, by this meaning the best ratio between the hydraulic operating speed available to the pump (fluid pressure or flow rate) and the electrical power absorbed by the motor associated with the pump, and at the same time having the lowest possible cost of the discharge function.

This sort of motor-pump assembly normally comprises a pump with an impeller made to rotate by a shaft, and a permanent-magnet single-phase synchronous electric motor, equipped with a stator and a rotor mutually separated by an air gap. The rotor is of the type using permanent magnets and is able to making the shaft connected to the impeller rotate. The stator is of the diapason type and is equipped with a ferromagnetic pack core of U-shaped laminations so as to form two prongs of the diapason; each of these prongs has a copper reel wrapped around it and has a pole piece that, together with the other pole piece, combines to coaxially wrap around the rotor, beyond the air gap. In order to keep noise down and obtain a start-up step that is as fast as possible, a motor-pump assembly according to the invention has a rotor with so-called "slimline" configuration, the ratio between rotor length and diameter being at least equal to 1.3, so as to have a moment of inertia such as to go into resonance with the alternating stator field during the aforementioned start-up step.

It is known that the distance between the rotor and the stator must be as short as possible, and therefore the volume occupied by the air gap must be as small as possible, to allow the flow to meet the least possible reluctance. For this reason the pole pieces tend to wrap around the rotor: each pole piece takes on a shape with an arc-of-cylinder concave surface that faces the rotor. Moreover, the length of the pole piece, which is the height of the pack of laminations that form such a pole piece, equals the length of the rotor or in any case is substantially not very different from it. In this way, the flux closes as little as possible on the pole pieces, and the condition considered as being optimal is created.

Since the motor-pump assembly is of the mechanical starting type, there are no electronic start-up control apparatuses. In this way it is more cost-effective to make the motor-pump assembly, but it generally requires special provisions, such as devices with hauling mechanism between the shaft and the impeller. Patents EP 1308628 and EP 1372245, to the same Applicant, give some example embodiments of these US 4 750 872 is considered as the closest prior art of the subject-matter of claim 1 and discloses the features of the preamble of the claim.

Again because the motor-pump assembly is of the mechanical starting type, it is necessary to oversize the reels and the core, since it is necessary to bear the breakaway starting current, which is notoriously of the impulse type. Such a breakaway starting current is not limited by ramps (which are generally obtained by means of control programs loaded onto electronic control circuitry), and therefore it can greatly exceed the current necessary during normal operating conditions. In this way, disadvantageously, large pole pieces and prongs and spirals having a large area need to be used to obtain a magnetic circuit of lower reluctance to bear a high-intensity flux. Indeed, such a large amount of space has to be used that the windings can only be made from copper, since other materials of higher resistivity would require conductors having larger sections and, in order to be wound around the prongs, would need more space than what is actually available in the space between the prongs.

Patent application EP 1760859 discloses a motor for a pump in which the core has a shorter axial length than the ends of the pole pieces. In practice, the core can be undersized, with the exception of the pole pieces. This embodiment does not worsen the start-up conditions of the motor, not influencing the breakaway starting current.

Nevertheless, it would be preferable to seek a motor-pump assembly that has greater structural simplicity, possibly using different, more cost-effective materials.

The technical problem underlying the present invention is that of devising a motor-pump assembly for household appliances with characteristics of particular structural simplicity

### Summary of the invention

The idea for a solution forming the basis of the present invention is to use a motor with a pack of laminations that is substantially shorter than the rotor.

In accordance with this idea for a solution, the technical problem is solved by a motor-pump assembly defined in claim 1.

In a motor-pump assembly according to the invention, the longitudinal ends of the rotor magnets do not have pole pieces on top of them; in this way, there seems to be a pointless waste of material, backed up by the teachings of the prior art, according to which the pole pieces must wrap around the rotor magnets as much as possible, otherwise there will be greater reluctance in the magnetic circuit. However, the inventor has discovered, through experimental tests and numerical simulations, that, even if the height of the pack of laminations decreases (this means that the pole pieces are reduced in the direction of the rotation axis of the rotor) the concatenated flux decreases in a less than proportional way. The flux, indeed, does not only close on the pole pieces, but can also close on other parts of the core, such as the yoke and the prongs.

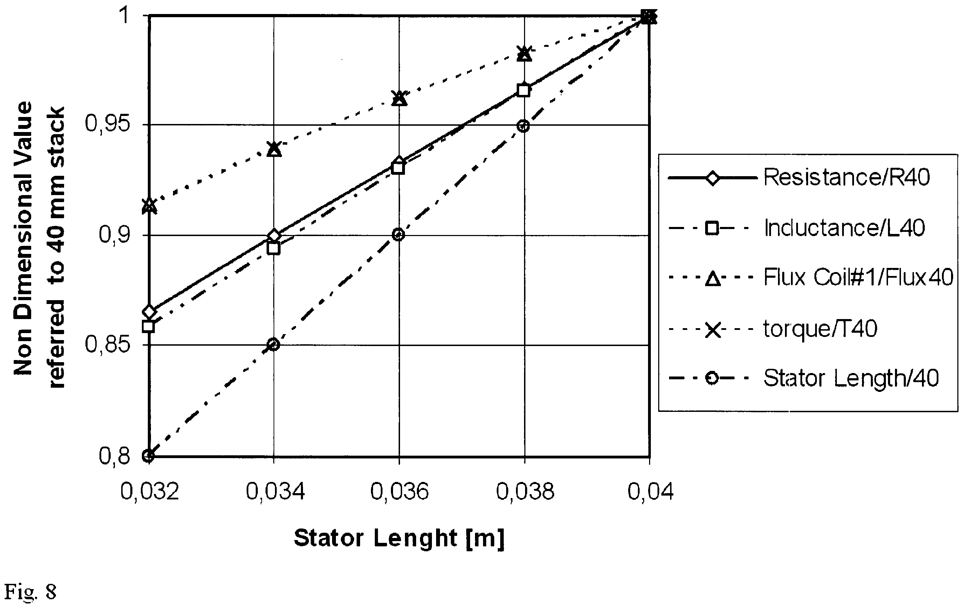

In figure 8 it is possible to see the result of a simulation of a pump for the US market, with a rotor having diameter 19 mm and length 45 mm. The X-axis represents the length of the pole pieces (which is the height of the pack of laminations), whereas the Y-axis represents, in non-dimensional values related to one unit, different physical values, including the flux (indicated by small triangles joined by a dotted line) and the height of the stator pack (indicated by small circles joined by a bold line composed of a dash followed by two dots). It can be seen that when the height of the stator pack passes from 40 mm to 32 mm (in figure 8 they are indicated in metres), the flux passes from 1 to slightly over 0.92. In practice, a 20% reduction in height of the pack of laminations surprisingly corresponds to a reduction of about 8.5% of the concatenated flux.

A pump according to the invention therefore has a shorter pack of laminations than an analogous conventional motor, which drives to a core having a smaller section and into reels with spirals of smaller area. Certainly, such a smaller area must be compensated by a greater number of spirals, but this greater number of spirals is proportional to the decrease in flux and not to the reduction in height of the pack of laminations. If, for example, the height of the pack of laminations is reduced by 20%, the area of the spirals is consequently reduced by 20%, whereas the number of spirals only has to increase by 8.5%, resulting in a smaller bulk in the space between the prongs of the stator. The motor can thus be made with a smaller and more compact ferromagnetic core.

According to a particularly advantageous embodiment, the windings are made from aluminium, which is more cost-effective than copper even if it has higher resistivity. A motor according to the invention can house aluminium coils, which are larger than copper ones. The aluminium windings extend outside requiring greater volume than the equivalent motor with copper windings, but such a greater volume, due to the volume of the windings, is acceptable since it gives a larger heat exchange surface that means more efficient heat disposal.

Moreover, since it is clear that such a motor-pump assembly has more aluminium and less iron, the motor-pump assembly advantageously weighs less.

Therefore, a motor-pump assembly according to the invention, in particular comprising a high-density single-phase asynchronous electric motor with aluminium reels, solves the typical problems of household appliance components.

The characteristics and advantages of the motor-pump assemblies according to the invention shall become clearer from the following description of an example embodiment thereof, given for indicating and not limiting purposes with reference to the attached drawings.

### Brief description of the drawings

- figure 1 shows a plan view of the motor-pump assembly according to the present invention in which, relative to the pump, just the impeller can be seen;
- figure 2 shows a side view of the motor-pump assembly of figure 1;
- figure 3 shows a front view of the motor-pump assembly of figure 1;
- figure 4 shows a section view according to the line IV-IV of figure 3;
- figure 5 shows an exploded perspective view of the motor-pump assembly of figure 1;
- figure 6 shows an enlarged section view according to the line VI-VI of figure 1
- figure 7 shows a view almost analogous t the view of figure 6 but limited to a few details;
Figure 8 shows a progression of the concatenated flux as the length of the pack of laminations varies.

### Detailed description

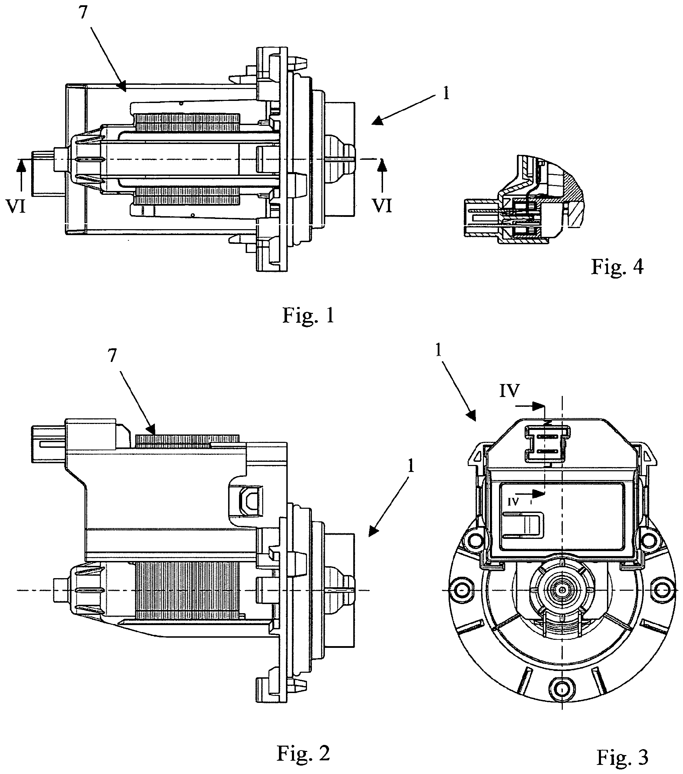

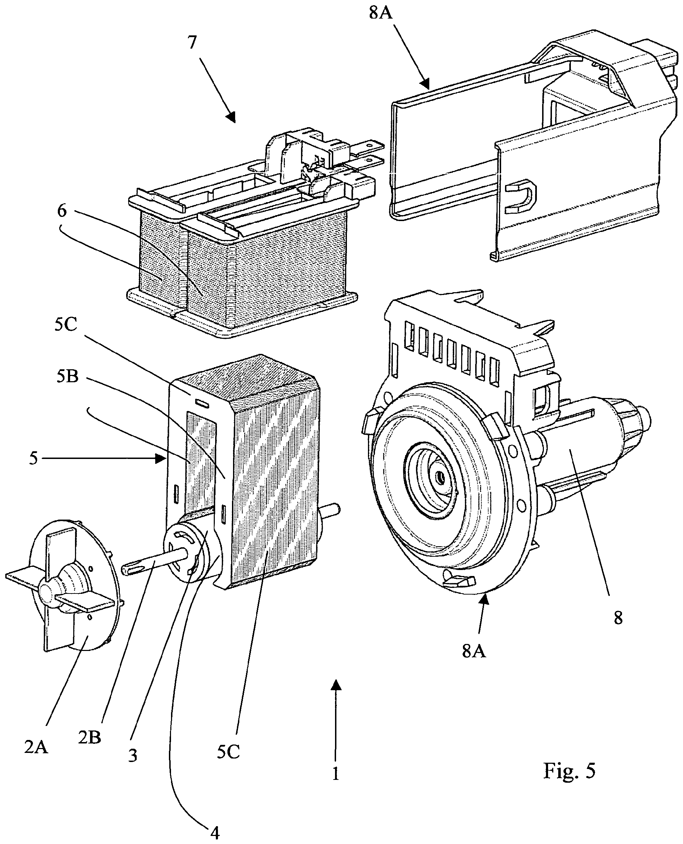

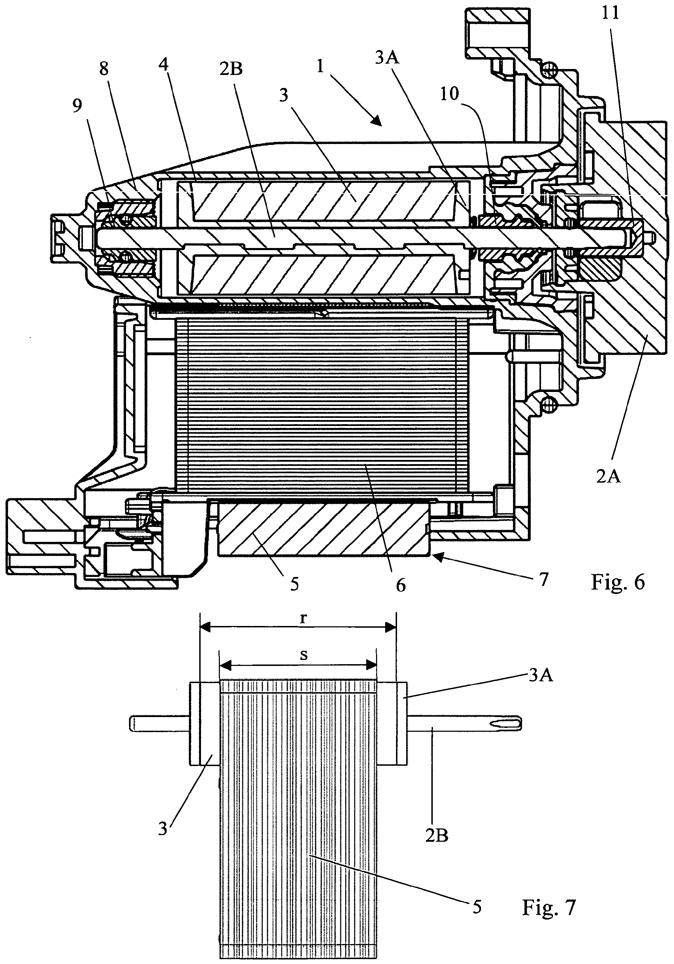

With reference to figures 1-7, a motor-pump assembly 1 according to the invention is illustrated. Such a motor-pump assembly 1 consists of a pump, just the impeller of which is explicitly depicted, since the other components would not bring anything to clarify the description of the invention, and a single-phase synchronous electric motor 7 with permanent magnets of the inner rotor type.

The impeller 2A is connected, through a shaft 2B, to the rotor 3 of the single-phase synchronous electric motor 7. A plastic overmould 3A is fixedly connected to the rotor 3. Impeller 2A, shaft 2B, rotor 3 and overmould 3A are able to rotate coaxially.

Bearings 9, 10, *per se* known, bear the shaft 2B and, consequently, the rotor 3, in such a way that they can rotate.

The rotor 3 is of the type using permanent magnets. It is separated, through an air gap 4, from a stator 5 of the diapason type (sometimes known as forked), which acts as ferromagnetic core. Such a stator 5 is formed from a pack of U-shaped laminations made from ferromagnetic material, stacked in the longitudinal direction (which is the height of the pack of laminations), so that their surfaces stick together. The stator 5 is therefore formed from the following portions:
- two prongs 5B, surrounded by windings (described hereafter);
- two pole pieces 5C, with an arc of cylinder-shaped concave inner surface that faces the rotor 3;
- a yoke 5A.

The length (meaning in the longitudinal direction, i.e. in the direction of the rotation axis of the rotor and transversally to the laminations) of the pole pieces 5C coincides with the length of the stator and with the height of the pack of laminations.

The length of the rotor 3 is greater than the length of the pole pieces 5C, i.e. the height of the pack of stator laminations 5. The rotor has permanent magnets with equal portions, at the longitudinal ends, free from the winding of said pole pieces, i.e. not wrapped around by the pole pieces.

Aluminium windings 6 are wound around the prongs 5B, so as to totally fill the volume between the prongs 5B and so as to therefore constitute a high-density motor. Different embodiments could provide the use of copper windings, in which case the volume occupied by the reels would be less, whilst not having the advantages that can be obtained by aluminium.

A casing 8, shaped essentially like a tube and formed in one piece with a flange 8B coupled with the volute of the pump (not illustrated since it is conventional), insulates the rotor 3 water-tight with respect to the stator 5, which in turn is housed in a casing 8A coupled with the flange 8B.

The impeller 2A is connected to the shaft 2B through a known kinematic linkage 11.

In the example shown, the rotor has a diameter of 19 mm and a length of 45 mm. The stator pack has a height of 35 mm, i.e. 22% less than the length of the rotor. The height of each of the prongs 5B is therefore about 35 mm. The aluminium windings 6 each consist of 510 spirals wound around such prongs 5B, with conductors having a diameter of 0.5 mm. The total weight of such windings is just 62 g.

A different embodiment could provide reels with 510 copper spirals with conductors having a diameter of 0.40 mm. The total weight of such windings would be 126 g.

According to the prior art, with a rotor having a diameter of 19 mm and a length of 45 mm, copper windings with 470 spirals having a diameter of 0.40 mm would be required, for a weight of 165 g.

The pack of laminations that constitutes the stator 5 has a height s that is substantially less than the length r of the rotor 3 (according to the prior art, it would be r = s or else r ≈ s). In figure 8 this concept is expressed with exaggerated dimensions.

The main advantage of the present invention is the particular structural simplicity of the motor-pump assembly, which optimises the spaces using less ferromagnetic material, and therefore a stator having smaller volume, than analogous motors according to the prior art.

Moreover, in embodiments in which the reels are made from copper, they are shorter and use less material than what is normally provided by the prior art. The decrease in overall length of the conductors means smaller losses by the joule effect, optimising the thermal yield of the motor-pump assembly.

Alternatively, it is advantageously possible to use reels made from aluminium, which is a material with greater resistivity and therefore requires conductors with a larger section than copper does. Since the prongs have a smaller section and the space between the prongs is greater, voluminous aluminium reels can be wound around the stator prongs; the greater heat exchange surface with the outside of aluminium reels allows a more optimised disposal of heat.

Advantageously, a motor-pump assembly according to the invention has a motor that works in an area close to saturation of the ferromagnetic material, maximising the electrical and hydraulic efficiency of the motor-pump assembly.

Moreover, as has been seen with the numerical examples, a motor-pump assembly is advantageously obtained that is lighter than current ones, since there is less lead and lighter reels, above all if made from aluminium.

A motor according to the invention can be configured like a high-density motor, i.e. such that the space is totally filled with conducting material.

It is clear that a motor-pump assembly according to the invention is advantageously less expensive than conventional motor-pump assemblies, and allows the cost of the water discharge function to be minimised, so as to limit the assembly costs of household appliances such as dishwashers and washing machines.

## Claims

1. Motor-pump assembly for household appliances (1) such as dishwashers and washing machines, in particular for discharging water, comprising a pump equipped with an impeller (2A) and an electric motor (7) with mechanical start-up equipped with a stator (5) and with a rotor (3) mutually separated by an air gap (4), said rotor (3) being of the type using permanent magnets, said stator (5) being of the diapason type and equipped with a pack core of laminations and with a pair of pole pieces (5C) that wrap coaxially around said rotor (3), **characterised in that** the electric motor (7) is a single-phase electric motor and **in that** the length (s) of said pole pieces (5C) of the stator (5) is at least 15% less than the length (r) of the permanent magnet of said rotor (3).

2. Motor-pump assembly for household appliances according to any one of the previous claims, **characterised in that** the length (s) of said pole pieces (5C) of the stator (5) is between 20% and 35% less than the length (r) of the permanent magnet of said rotor (3),

3. Motor-pump assembly for household appliances according to claim 1 or 2, **characterised in that** reels (6) of aluminium wire are wound around said stator (5).

4. Motor-pump assembly for household appliances according to any one of the previous claims 1-3, **characterised in that** the laminations of said stator (5) are substantially U-shaped, the arms of which, in the extreme position, define said pole pieces (5C).

5. Motor-pump assembly for household appliances according to any one of the previous claims, **characterised in that** the length of said pole pieces (5C) is equal to the height (s) of the pack of laminations of said stator (5).

6. Motor-pump assembly for household appliances according to any one of the previous claims, **characterised in that** said reels (6) occupy the entire space between said prongs (5B) so as to make a high-density motor.

7. Motor-pump assembly for household appliances according to any one of the previous claims, **characterised in that** the length (r) of the permanent magnet of said rotor (3) is 45 mm, the diameter of said rotor (3) is 19 mm, and the length (s) of said pole pieces (5C) is 35 mm within the usual tolerance margins.

8. Motor-pump assembly for household appliances according to claim 7, **characterised in that** it has 510 aluminium spirals with wire having a diameter of 0.5 mm, within a tolerance margin of 10%.

9. Motor-pump assembly for household appliances according to claim 7, **characterised in that** it has 510 copper spirals with wire having a diameter of 0.45 mm, within a tolerance margin of 10%.

10. Motor-pump assembly for household appliances according to any one of the previous claims, **characterised in that** said motor has a rotor using permanent magnets with equal portions, at the longitudinal ends, free from the winding of said pole pieces.

## Patentansprüche

1. Motorpumpenanordnung für Haushaltsgeräte (1) wie Geschirrspülmaschinen und Waschmaschinen, insbesondere zur Ableitung von Wasser, umfassend eine Pumpe, die mit einem Laufrad (2A) und einem Elektromotor (7) mit mechanischer Startvorrichtung versehen ist, der mit einem Stator (5) und mit einem Rotor (3) versehen ist, die durch einen Luftspalt (4) voneinander getrennt sind, wobei der Rotor (3) von dem Typ ist, der Permanentmagnete verwendet, wobei der Stator (5) vom Stimmgabeltyp ist und mit einem Packkern von Lamellen und mit einem Paar von Polstücken (5C) versehen ist, die koaxial um den Rotor (3) gewickelt sind, **dadurch gekennzeichnet, dass** der Elektromotor (7) ein einphasiger Synchron-Elektromotor ist und dass die Länge (s) der Polstücke (5C) des Stators (5) um mindestens 15% kleiner als die Länge (r) des Permanentmagneten des Rotors (3) ist.

2. Motorpumpenanordnung für Haushaltsgeräte nach einem der vorhergehenden Ansprüche, **dadurch gekennzeichnet, dass** die Länge (s) der Polstücke (5C) des Stators (5) zwischen 20% und 35% kleiner ist als die Länge (r) des Permanentmagneten des Rotors (3) ist.

3. Motorpumpenanordnung für Haushaltsgeräte nach einem der Ansprüche 1 oder 2, **dadurch gekennzeichnet, dass** Spulen (6) aus Aluminiumdraht um den Stator (5) gewickelt sind.

4. Motorpumpenanordnung für Haushaltsgeräte nach einem der vorhergehenden Ansprüche 1 bis 3, **dadurch gekennzeichnet, dass** die Lamellen des Stators (5) im Wesentlichen U-förmig sind, wobei Arme des U in der Extremstellung die Polstücke ausbilden (5C).

5. Motorpumpenanordnung für Haushaltsgeräte nach einem der vorhergehenden Ansprüche, **dadurch gekennzeichnet, dass** die Länge der Polstücke (5C) gleich der Höhe (s) des Lamellenpacks des Stators (5) ist.

6. Motorpumpenanordnung für Haushaltsgeräte nach einem der vorhergehenden Ansprüche, **dadurch gekennzeichnet, dass** die Spulen (6) den gesamten Raum zwischen den Zinken (5B) einnehmen, um einen Motor mit hoher Dichte zu schaffen.

7. Motorpumpenanordnung für Haushaltsgeräte nach einem der vorhergehenden Ansprüche, **dadurch gekennzeichnet, dass** die Länge (r) des Permanentmagneten des Rotors (3) 45 mm beträgt, der Durchmesser des Rotors (3) 19 mm und die Länge (s) der Polstücke (5C) 35 mm mit den üblichen Toleranzbereichen beträgt.

8. Motorpumpenanordnung für Haushaltsgeräte nach Anspruch 7, **dadurch gekennzeichnet, dass** sie 510 Aluminiumspiralen mit Draht von einem Durchmesser von 0,5 mm mit einem Toleranzbereich von 10% aufweist.

9. Motorpumpenanordnung für Haushaltsgeräte nach Anspruch 7, **dadurch gekennzeichnet, dass** sie 510 Kupferspiralen mit Draht von einem Durchmesser von 0,45 mm mit einem Toleranzbereich von 10% aufweist.

10. Motorpumpenanordnung für Haushaltsgeräte nach einem der vorhergehenden Ansprüche, **dadurch gekennzeichnet, dass** der Motor einen Rotor aufweist, der Permanentmagnete mit gleichen Teilbereichen an den Längsenden verwendet, die frei von der Wicklung der Polstücke sind.

## Revendications

1. Ensemble moteur-pompe pour appareils électroménagers (1) tels que lave-vaisselle et lave-linge, en particulier pour évacuer l'eau, comprenant une pompe équipée d'une roue à aubes (2A) et d'un moteur électrique (7) avec démarrage mécanique équipé d'un stator (5) et d'un rotor (3) séparés l'un de l'autre par un entrefer (4), le rotor (3) étant du type utilisant des aimants permanents, le stator (5) étant du type diapason et étant équipé d'un noyau de lamelles empilées et d'une paire de pièces de pôle (5C) qui s'enroulent de façon coaxiale autour du rotor (3), **caractérisé en ce que** le moteur électrique (7) est un moteur électrique monophasé et **en ce que** la longueur (s) des pièces de pôle (5C) du stator (5) est au moins inférieure de 15 % à la longueur (r) de l'aimant permanent du rotor (3).

2. Ensemble moteur-pompe pour appareils électroménagers selon l'une quelconque des revendications précédentes, **caractérisé en ce que** la longueur (s) des pièces de pôle (5C) du stator (5) est inférieure de 20 % à 35 % à la longueur (r) de l'aimant permanent du rotor (3).

3. Ensemble moteur-pompe pour appareils électroménagers selon la revendication 1 ou 2, **caractérisé en ce que** des bobines (6) en fil d'aluminium sont enroulées autour du stator (5).

4. Ensemble moteur-pompe pour appareils électroménagers selon l'une quelconque des revendications précédentes 1 à 3, **caractérisé en ce que** les lamelles du stator (5) sont sensiblement en forme de U, dont les branches, dans la position extrême, définissant les pièces de pôle (5C).

5. Ensemble moteur-pompe pour appareils électroménagers selon l'une quelconque des revendications précédentes, **caractérisé en ce que** la longueur des pièces de pôle (5C) est égale à la hauteur (s) de l'empilage de lamelles du stator (5).

6. Ensemble moteur-pompe pour appareils électroménagers selon l'une quelconque des revendications précédentes, **caractérisé en ce que** les bobines (6) occupent la totalité de l'espace entre les broches (5B) de manière à créer un moteur à haute densité.

7. Ensemble moteur-pompe pour appareils électroménagers selon l'une quelconque des revendications précédentes, **caractérisé en ce que** la longueur (r) de l'aimant permanent du rotor (3) est de 45 mm, le diamètre du rotor (3) est de 19 mm et la longueur (s) des pièces de pôle (5C) est de 35 mm, avec les marges de tolérance habituelles.

8. Ensemble moteur-pompe pour appareils électroménagers selon la revendication 7, **caractérisé en ce qu'**il présente 510 spirales en aluminium avec un fil de 0,5 mm de diamètre, avec une marge de tolérance de 10 %.

9. Ensemble moteur-pompe pour appareils électroménagers selon la revendication 7, **caractérisé en ce qu'**il présente 510 spirales en cuivre avec un fil ayant un diamètre de 0,45 mm, avec une marge de tolérance de 10%.

10. Ensemble moteur-pompe pour appareils électroménagers selon l'une quelconque des revendications précédentes, **caractérisé en ce que** le moteur comporte un rotor utilisant des aimants permanents avec des portions égales, aux extrémités longitudinales, exemptes de l'enroulement desdites pièces de pôle.
